# FASCICULE DE BREVET EUROPEEN

(11) **EP 2 504 554 B1**
(45) Date de publication et mention de la délivrance du brevet: **09.09.2015**
(21) Numéro de dépôt: 10799109.3
(22) Date de dépôt: 25.11.2010
(51) Int. Cl.: F02K 1/76

(54) **ENSEMBLE POUR TURBOREACTEUR D'AERONEF COMPRENANT UN CAPOT D'INVERSION DE POUSSÉE**
AGGREGAT FÜR TRIEBWERK EINSCHLIESSEND SCHUBUMKEHRKLAPPEN
UNIT FOR TURBOREACTOR COMPRISING THRUST REVERSER COWLINGS

(30) Priorité: 26.11.2009 FR 0905687
(43) Date de publication de la demande: 03.10.2012
(73) Titulaire: Aircelle, 76700 Gonfreville l'Orcher (FR)
(72) Inventeur: CARUEL, Pierre, F-76600 Le Havre (FR); VAUCHEL, Guy Bernard, F-76700 Harfleur (FR); JORET, Jean-Philippe, F-27210 Beuzeville (FR); BAILLARD, André, F-76110 Bretteville du Grand Caux (FR)
(74) Mandataire: Gaillarde, Frédéric F. Ch.
(86) Numéro de dépôt international: PCT/FR2010/052537
(87) Numéro de publication internationale: WO 2011/067520

(56) Documents cités:
- EP-A1- 1 286 037
- EP-A1- 1 298 309
- FR-A1- 2 914 700
- FR-A1- 2 916 426
- US-B1- 7 484 356

## Description

La présente invention se rapporte à un ensemble pour turboréacteur d'aéronef.

On connaît de la technique antérieure, et notamment du document FR 2 916 426, un ensemble pour turboréacteur, comprenant un pylône et une nacelle supportée par ce pylône, cette nacelle étant du type comprenant un inverseur de poussée à grilles comprenant un capot monobloc monté coulissant sur des rails disposés de part et d'autre dudit pylône entre une position de jet direct et une position d'inversion de poussée.

Par « capot monobloc », on entend un capot de forme quasiannulaire, s'étendant d'un côté à l'autre du pylône sans interruption.

Un tel capot, comme ce montré dans le document FR 2 914 700, est souvent désigné par les termes anglo-saxons « O-duct », par allusion à la forme de virole d'un tel capot, par opposition au « D-duct », qui comprend en fait deux demi-capots s'étendant chacun sur une demi-circonférence de la nacelle.

Dans un cas comme dans l'autre, c'est le recul du capot par coulissement le long des rails solidaires du pylône qui permet de dégager les grilles d'inversion de poussée, et ainsi de mettre en oeuvre la fonction d'inversion de poussée.

Il est bien entendu crucial qu'un tel mouvement de coulissement ne puisse pas se produire de manière inopinée : une telle ouverture serait en effet fatale en phase de vol.

Pour ces raisons, des verrous de sécurité sont prévus à différents endroits de l'inverseur de poussée pour bloquer l'ouverture non souhaitée du capot.

Dans un inverseur à « D-duct », on prévoit classiquement trois verrous de sécurité pour chaque demi-capot : deux verrous agissant directement sur deux vérins d'actionnement de chaque demi-capot, et un troisième verrou interposé entre la poutre dite « 6 heures » (c'est-à-dire disposée dans la partie inférieure de la nacelle et sur laquelle les deux demi-capots sont montés coulissants) et le demi-capot concerné.

Des sources de puissance indépendantes sont prévues pour ces verrous, de manière à accroître la fiabilité du dispositif de sécurité.

La localisation éloignée du troisième verrou par rapport aux deux autres offre de plus un gain de sécurité vis-à-vis d'un « duct burst » (explosion d'une conduite) ou d'une perte d'aube : dans un tel cas, seuls un ou deux verrous pourrait éventuellement être détruits, mais pas tous.

Dans un inverseur à « O-duct », il n'y a par définition pas de poutre 6 heures : donc l'implantation d'un troisième verrou comme dans un inverseur à « D-duct » n'est pas possible.

La présente invention a notamment pour but de permettre l'implantation d'un troisième verrou de sécurité dans un inverseur à « O-duct », qui procure le même degré de fiabilité et de sécurité que celui d'un inverseur à « D-duct ».

On atteint ce but de l'invention avec un ensemble pour turboréacteur, comprenant un pylône et une nacelle supportée par ce pylône, cette nacelle étant du type comprenant un inverseur de poussée à grilles comprenant un capot monobloc monté coulissant sur des rails disposés de part et d'autre dudit pylône entre une position de jet direct et une position d'inversion de poussée, cet ensemble propulsif étant remarquable en ce qu'il comprend des moyens de verrouillage du coulissement dudit capot sur lesdits rails, interposés entre ledit pylône et ledit capot.

La présence de ces moyens de verrouillage dans la zone d'interface entre le capot et le pylône permet de réaliser un verrouillage mécaniquement et géographiquement indépendant de celui qui est effectué dans les vérins d'actionnement du capot, offrant ainsi les degrés de fiabilité et de sécurité recherchés.

Suivant d'autres caractéristiques optionnelles de cet ensemble selon l'invention :
- lesdits moyens de verrouillage comprennent d'une part un verrou comprenant un corps et une gâche articulée sur ce corps, et d'autre part un pêne apte à coopérer avec cette gâche : un tel verrou est utilisé notamment comme troisième verrou dans les inverseurs à « D-duct », et ne nécessite aucune adaptation particulière pour sa mise en place dans un inverseur à « O-duct » ;
- ledit corps de verrou est monté à l'intérieur dudit pylône, ladite gâche traversant un orifice formé dans ce pylône, et ledit pêne est solidaire dudit capot : cet agencement permet d'utiliser l'espace disponible à l'intérieur du pylône pour y installer le verrou ;
- ledit corps de verrou est monté à l'intérieur dudit capot, ladite gâche traversant un orifice formé dans ce capot, et ledit pêne est solidaire dudit pylône : il s'agit d'un agencement symétrique du précédent ;
- les moyens de verrouillage sont compris dans l'épaisseur de la structure dudit capot ;
- on prévoit des câbles d'alimentation électrique dudit verrou qui présentent une surlongueur : cette surlongueur permet au verrou de se déplacer avec le capot tout en demeurant électriquement connecté ;
- on prévoit des câbles d'alimentation électrique dudit verrou qui sont déconnectables de la structure fixe de la nacelle lorsque ledit capot passe de sa position de jet direct à sa position d'inversion de poussée : cet agencement permet de s'affranchir de la surlongueur susmentionnée, tout en permettant au verrou d'être électriquement connecté dans la position du capot où l'on a besoin d'actionner ce verrou, à savoir la position fermée de ce capot ;
- lesdites grilles sont montées coulissantes sur d'autres rails disposés de part et d'autre du pylône, entre une position de service et une position de maintenance, ces rails étant radialement et circonférentiellement décalés par rapport aux rails de coulissement dudit capot monobloc : ce coulissement des grilles permet d'accéder aux parties de moteur qui se trouvent sous ces grilles ; le décalage des rails de coulissement de ces grilles permet leur mouvement sans interférence avec le verrou du capot ;
- on prévoit un jeu circonférentiel entre ledit pêne et ladite gâche en position déverrouillée : ce jeu permet de garantir la possibilité de coulissement du capot une fois que la gâche est déverrouillée ;
- ledit verrou comprend une broche de blocage du système de verrouillage de ladite gâche, amovible manuellement : cette broche permet d'inhiber la fonction d'inversion de poussée, ce qui peut être souhaitable par exemple lorsque l'inverseur de poussée présente des dysfonctionnements et que l'on souhaite néanmoins que l'aéronef puisse voler.

D'autres caractéristiques et avantages de la présente invention apparaîtront à la lumière de la description qui va suivre, et à l'examen des dessins ci-annexés dans lesquels :
- la figure 1 représente une vue en perspective d'un ensemble propulsif selon l'invention,
- la figure 2 représente une vue en perspective de la zone Il de la figure 1, le capot de l'inverseur de poussée ayant été ôté,
- la figure 3 est une vue de côté de la zone de la figure 2,
- la figure 4 est une vue en coupe des organes représentés à la figure 3, selon la ligne IV de cette figure,
- les figures 5 et 6 sont des vues de dessus de la zone des figures 2 et 3, les grilles d'inversion de poussée se trouvant respectivement en position de service et de maintenance, et les moyens de verrouillage se trouvant respectivement en positions verrouillée et déverrouillée,
- la figure 7 est une vue analogue à celle de la figure 4 d'un autre mode de réalisation de l'invention,
- la figure 8 est une vue analogue à celle de la figure 5 de cet autre mode de réalisation,
- les figures 9 et 10 sont des vues d'une variante de cet autre mode de réalisation, le capot de l'inverseur de poussée se trouvant respectivement en positions de jet direct et d'inversion de poussée, et les moyens de verrouillage se trouvant par conséquent respectivement en positions verrouillée et déverrouillée, et
- les figures 11 et 12, analogues aux figures 4 et 7, représentent des moyens de blocage manuel du verrou selon l'invention, respectivement pour les deux modes de réalisation susmentionnés.

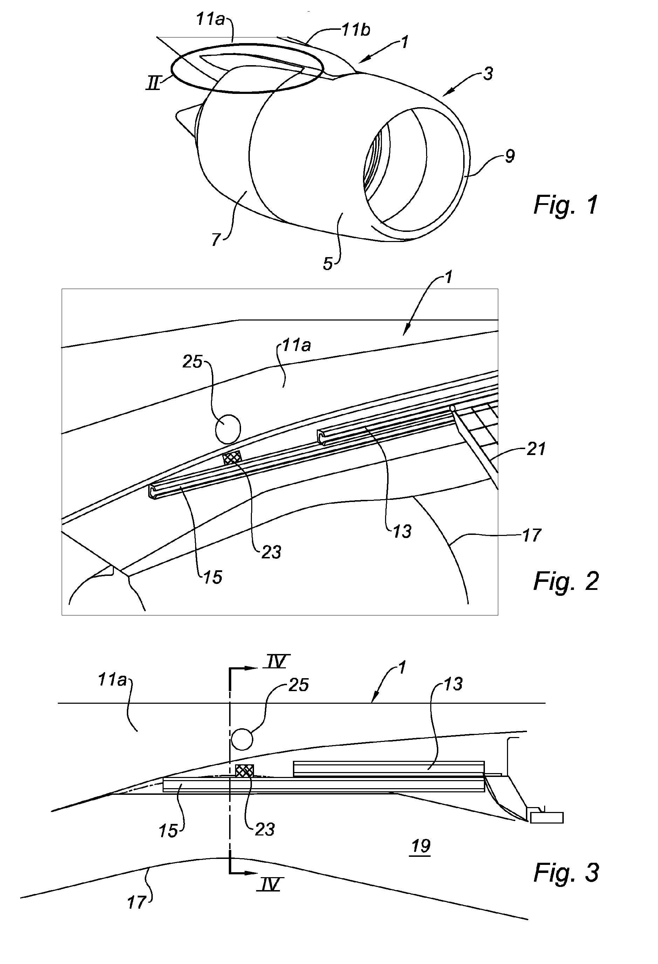

En se reportant à la figure 1, on peut voir un ensemble pour turboréacteur d'aéronef, comprenant un pylône 1 et, suspendue à ce pylône, une nacelle 3.

Comme cela est connu en soi, cette nacelle 3 comporte typiquement un capot amont 5, et un capot aval 7, l'amont et l'aval s'entendant par rapport au flux d'air traversant la nacelle.

Dans le cas particulier représenté, le capot amont 5 forme également une entrée d'air 9 de la nacelle.

Le capot aval 7 est monté coulissant entre la position représentée à la figure 1, dite position de «jet direct», correspondant à une situation où l'aéronef est en vol, et une position coulissée vers l'aval de la nacelle, permettant de réaliser une fonction d'inversion de poussée par rejet d'une partie de l'air traversant la nacelle 9 en amont de celle-ci.

L'inverseur de poussée représenté à la figure 1 est du type à « O-duct », c'est-à-dire que le capot coulissant 7 forme une pièce monobloc sensiblement annulaire s'étendant sans discontinuité d'un côté 11a du pylône 1 au côté opposé 11 b de ce pylône.

On se reporte à présent aux figures 2 à 6 ci-annexées, sur lesquelles on a représenté un premier mode de réalisation de l'invention.

Sur les figures 2 et 3, qui se rapportent à la zone Il de la figure 1 une fois que le capot coulissant 7 a été ôté, on peut voir le pylône 1 et, sur le côté 11 a de ce pylône, un rail court 13 et un rail long 15.

On peut également voir sur ces deux figures la structure interne 17 entourant le turboréacteur, définissant la veine d'air froid 19.

Le rail court 13 permet le coulissement de grilles d'inversion de poussée 21 entre une position de service représenté à la figure 2, et une position de maintenance dans laquelle ces grilles sont coulissées à l'extrémité arrière du rail court 13, de manière à permettre l'accès au turboréacteur.

Le rail long 15 et son homologue disposé de l'autre côté du pylône 1 permettent le coulissement du capot 7 entre sa position « jet direct » et sa position d'inversion de poussée dans laquelle il dégage les grilles d'inversion 21, permettant l'orientation d'une partie du flux d'air circulant dans la veine19 vers l'avant de la nacelle.

Un verrou 23 est monté à l'intérieur du pylône 1, une trappe 25 formée sur le côté 11 a du pylône 1 permettant d'accéder à ce verrou 23.

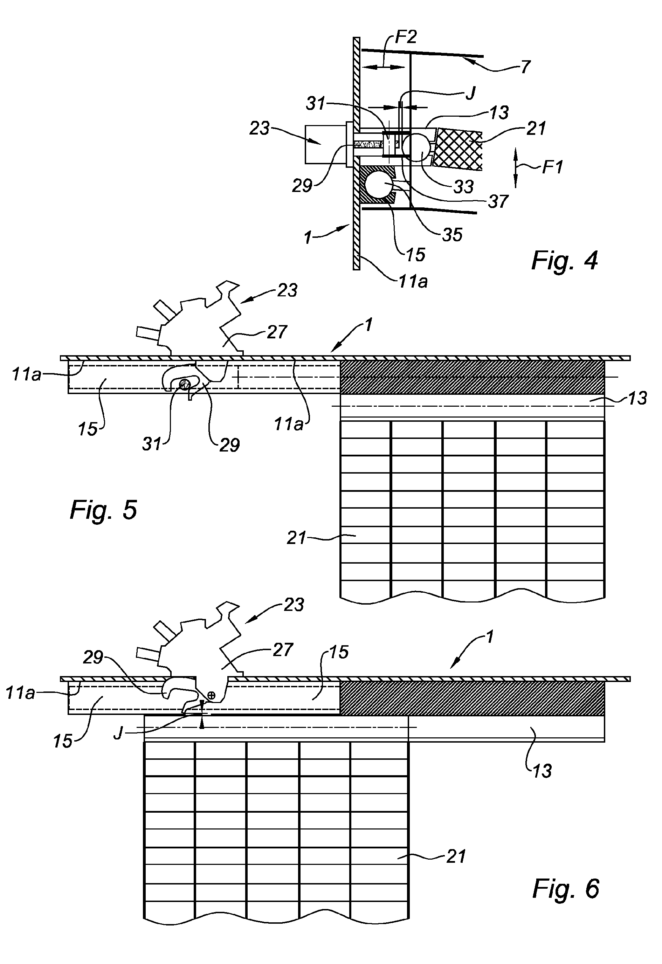

En se reportant aux figures 4 à 6, on peut voir que le verrou 23 comprend un corps 27 sur lequel est montée pivotante une gâche 29, sous l'action d'un moteur électrique logé à l'intérieur du corps 27.

Le corps 27 fixé sur la face intérieure du côté 11a du pylône 1 et la gâche 29 traversent la paroi formant ce côté 11a pour coopérer avec un pêne 31 solidaire du capot coulissant 7.

Sur la figure 5, les grilles d'inversion de poussée 21 sont représentées en position de service, et le capot coulissant (dont seul le pêne 31 est visible) est représenté en position de «jet direct» : dans cette position, ce capot coulissant recouvre les grilles d'inverseur de poussée 21, et la gâche 29 du verrou 23 bloque le pêne 31 vis-à-vis d'un mouvement vers l'arrière du capot coulissant, c'est-à-dire vers la gauche de la figure.

Sur les figures 4 et 6, les grilles d'inversion de poussée 21 sont représentées en position de maintenance, c'est-à-dire qu'elles ont coulissé vers l'arrière (vers la gauche de la figure 6) par rapport à la situation de la figure 5.

Le capot coulissant 7 est quant à lui en position d'inversion de poussée, c'est-à-dire reculé vers l'arrière de la nacelle, mouvement permis par le pivotement de la gâche 29 du verrou 23 en direction du pylône 1, permettant la libération du pêne 31 du capot coulissant.

Comme on peut le voir sur la figure 4, le rail court 13 des grilles d'inversion de poussée 21 et le coulisseau associé 33 de ces grilles sont décalés à la fois radialement (c'est-à-dire selon la direction de la flèche F1) et circonférentiellement (c'est-à-die selon la direction de la flèche F2) par rapport au rail long 15 et au coulisseau associé 35 du capot coulissant 7.

Plus précisément, un jeu J (voir figures 4 et 6) est prévu entre le coulisseau 33 des grilles 21 et la gâche 29 en position ouverte.

Le mode de fonctionnement et les avantages de l'ensemble de propulsion qui viennent d'être décrits résultent de ce qui précède.

En mode de fonctionnement en jet direct, les grilles d'inversion de poussée 21 et le capot coulissant 7 se trouvent donc en position amont sur leurs rails respectifs 13 et 15, comme cela est visible à la figure 5, et tout coulissement inopiné du capot 7 vers l'aval de la nacelle est empêché par la coopération de la gâche 29 avec le pêne 31.

Lorsqu'on souhaite actionner l'inversion de poussée, lors de l'atterrissage d'un aéronef, on commence par faire pivoter la gâche 29 en direction du côté 11a du pylône 1, de manière à l'amener à la position visible aux figures 4 et 6 : dans cette positon, le pêne 31 est libéré, et les vérins d'actionnement du capot 7 (non représentés) peuvent faire coulisser celui-ci vers l'aval de la nacelle, c'est-à-dire vers la gauche de la figure 6, de manière à découvrir les grilles d'inversion de poussée 21, et à rejeter ainsi vers l'avant de la nacelle une partie du flux d'air froid circulant dans la veine 19 (voir figure 3).

Cette position d'inversion de poussée permet également de réaliser les opérations de maintenance du moteur qui se trouve à l'intérieur de la nacelle.

Pour ce faire, il faut également faire coulisser les grilles d'inversion de poussée 21 en aval de leurs rails 13, de manière à les amener à la position représentée à la figure 6.

Grâce au jeu J qui existe ente le coulisseau 33 de ces grilles et la gâche 29 en position déverrouillée, ce mouvement de coulissement des grilles 21 peut s'effectuer sans blocage par le verrou 23.

A noter par ailleurs que l'étagement radial (c'est-à-dire selon la direction F1 de la figure 4) des coulisseaux 33 des grilles 21 et 35 du capot 7 permet d'obtenir les courses nécessaires pour les mouvements de chacun de ces organes.

L'étagement circonférentiel (flèche F2 de la figure 4) permet quant à lui le déplacement du coulisseau 33 sans blocage par le verrou 23.

Bien entendu, dans le but d'obtenir la surface efficace maximale pour les grilles d'inversion de poussée 21, on cherchera à minimiser la distance entre les coulisseaux 33 et le côté 11a du pylône 1, et l'on dimensionnera en particulier le pêne 31 et la ferrure 37 associée qui le relie au capot 7, de manière que cette ferrure se situe la plus proche possible du côté 11a du pylône 1.

Le mode de réalisation qui vient d'être exposé permet d'obtenir un troisième verrou disposé dans la zone de coulissement du capot 7 par rapport au pylône 1, distant des verrous agissant sur les vérins d'actionnement du capot 7, et pouvant être alimenté par une source de puissance totalement indépendante.

On obtient de la sorte une excellente sécurité et une grande fiabilité vis-à-vis d'un risque d'ouverture intempestif du capot coulissant.

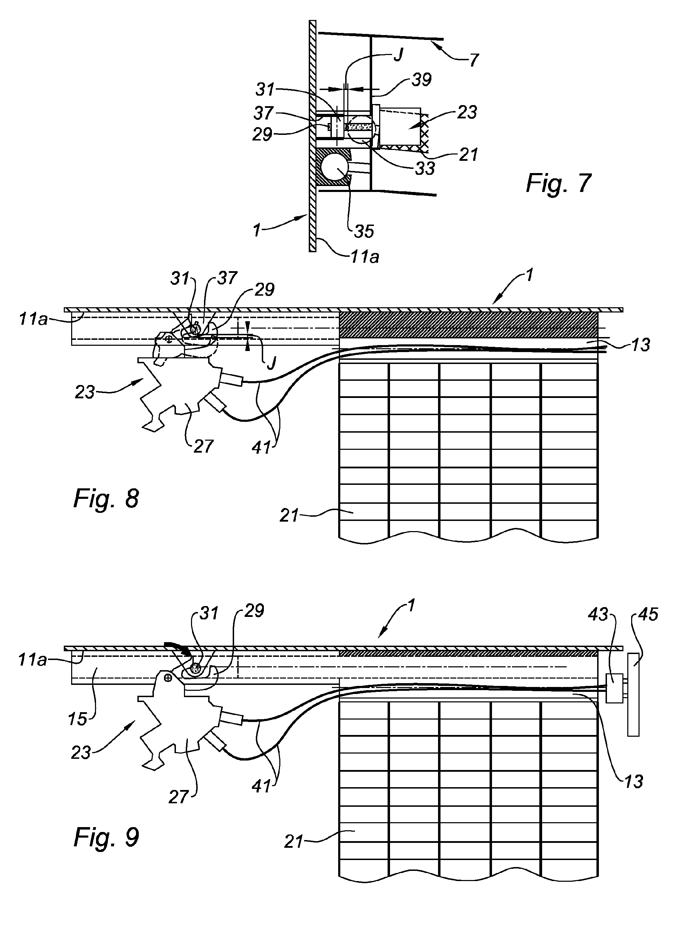

Sur les figures 7 et 8, analogues respectivement aux figures 4 et 5, on a représenté un deuxième mode de réalisation qui diffère du précédent en ceci que le verrou 23 est disposé à l'intérieur du capot coulissant 7, fixé sur une paroi interne 39 de celui-ci.

Le pêne 31 et sa ferrure associée 37 sont quant à eux fixés sur le côté 11a du pylône 1.

De même que précédemment, un jeu J est prévu entre la gâche 29 en position ouverte et le pêne 31.

Dans la mesure où, dans ce cas, le verrou 23 se déplace avec le capot coulissant 7, il faut prévoir que les câbles 41 d'alimentation électrique de ce verrou, reliés à une partie fixe de la nacelle, présentent une surlongueur, comme cela est représenté à la figure 8.

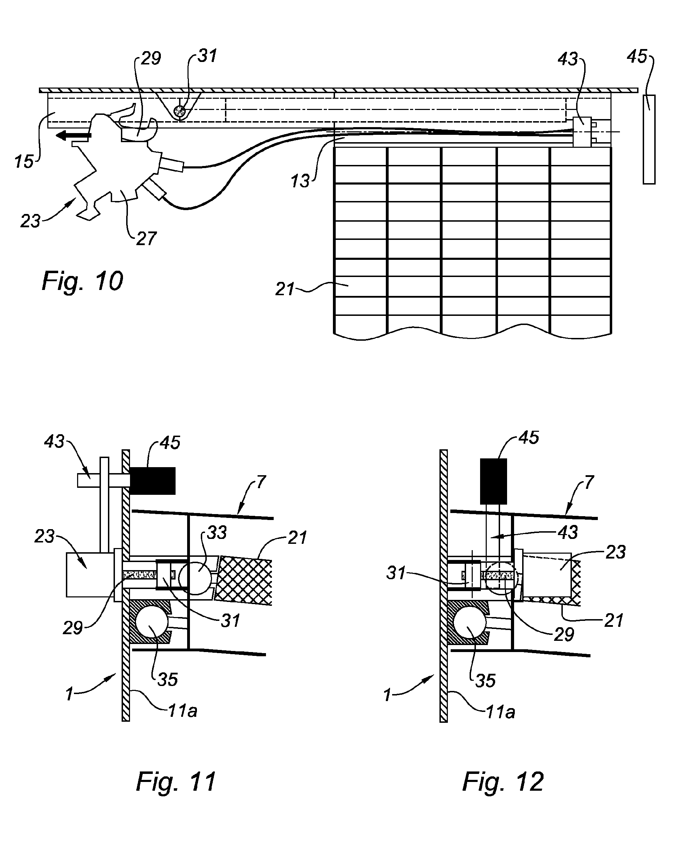

Selon une variante représentée aux figures 9 et 10, sur lesquelles on peut voir respectivement l'ensemble selon l'invention lorsque le capot coulissant se trouve en position «jet direct» et en position d'inversion de poussée, on peut prévoir que les câbles électriques 41 soient reliés à une prise 43 qui se débranche d'une prise correspondante 45, cette dernière étant montée sur la partie fixe de la nacelle.

En effet, la nécessité de pouvoir actionner le verrou 23 n'intervient que lorsque le capot coulissant 7 se trouve en position jet direct, une telle nécessité disparaissant une fois que le déverrouillage a été effectué et que le capot se déplace vers sa position d'inversion de poussée.

Pour chacun des modes de réalisation décrit ci-dessus, on peut envisager des moyens d'interdiction du mouvement de la gâche du verrou 23, pouvant comprendre notamment une broche de blocage 43 dont la tête 45 est disposée de manière à rester visible de l'extérieur.

Dans le premier mode de réalisation, comme cela est visible sur la figure 11, la broche 43 traverse le côté 11 a du pylône 1 en venant par exemple verrouiller un levier, appartenant au verrou, agissant sur la mécanique interne du verrou, et sa tête 45 reste visible à l'extérieur de ce côté.

Dans le deuxième mode de réalisation, comme cela est visible sur la figure 12, la broche 43 traverse le capot 7 et vient par exemple directement verrouiller la mécanique de verrouillage de la gâche, et sa tête 45 demeure visible à l'extérieur de ce capot.

Bien entendu, la présente invention n'est nullement limitée aux modes de réalisation décrits et représentés, fournis à tire de simples exemples.

## Revendications

1. Ensemble pour turboréacteur, comprenant un pylône (1) et une nacelle (3) supportée par ce pylône (1), cette nacelle (3) étant du type comprenant un inverseur de poussée à grilles (21) de type O-Duct comprenant un capot monobloc (7) monté coulissant sur des rails (15) disposés de part et d'autre dudit pylône (1) entre une position de jet direct et une position d'inversion de poussée, cet ensemble étant **caractérisé en ce qu'**il comprend des moyens (23, 31) de verrouillage du coulissement dudit capot (7) sur lesdits rails (15), interposés entre ledit pylône (1) et ledit capot (7).

2. Ensemble selon la revendication 1, dans lequel lesdits moyens de verrouillage comprennent d'une part un verrou (23) comprenant un corps (27) et une gâche (29) articulée sur ce corps (27), et d'autre part un pêne (31) apte à coopérer avec cette gâche (29).

3. Ensemble selon la revendication 2, dans lequel ledit corps de verrou (27) est monté à l'intérieur dudit pylône (1), ladite gâche (29) traversant un orifice formé dans ce pylône (1), et ledit pêne (31) est solidaire dudit capot (7).

4. Ensemble selon la revendication 2, dans lequel ledit corps de verrou (27) est monté à l'intérieur dudit capot (7), ladite gâche (29) traversant un orifice formé dans ce capot (7), et ledit pêne (31) est solidaire dudit pylône (1).

5. Ensemble selon la revendication 4, dans lequel les moyens de verrouillage sont compris dans l'épaisseur de la structure dudit capot (7).

6. Ensemble selon l'une des revendications 4 ou 5, dans lequel on prévoit des câbles (41) d'alimentation électrique dudit verrou (23) qui présentent une surlongueur.

7. Ensemble selon l'une des revendications 4 ou 5, dans lequel on prévoit des câbles d'alimentation électrique (41) dudit verrou (23) qui sont déconnectables de la structure fixe de la nacelle lorsque ledit capot (7) passe de sa position de jet direct à sa position d'inversion de poussée.

8. Ensemble selon l'une quelconque des revendications précédentes, dans lequel lesdites grilles (21) sont montées coulissantes sur d'autres rails (13) disposés de part et d'autre du pylône (1), entre une position de service et une position de maintenance, ces rails (13) étant radialement et circonférentiellement décalés par rapport aux rails (15) de coulissement dudit capot monobloc (7).

9. Ensemble selon la revendication 8, dans lequel on prévoit un jeu circonférentiel (J) entre ledit pêne (31) et ladite gâche (29) en position déverrouillée.

10. Ensemble selon l'une quelconque des revendications précédentes, dans lequel ledit verrou (23) comprend une broche (43) de blocage du système de verrouillage de ladite gâche (29), amovible manuellement.

## Patentansprüche

1. Baugruppe für Turbostrahltriebwerk, einen Mast (1) und eine Gondel (3) umfassend, die von diesem Masten (1) gehalten wird, wobei diese Gondel (3) eine Ausführung darstellt, die eine Schubumkehr mit Gittern (21) des Typs O-Duct umfasst, die eine aus einem Teil bestehende Abdeckung (7) umfasst, die auf Schienen (15) gleitend montiert ist, die beiderseits des besagten Mastes (1) zwischen einer Direktstrahl-Position und einer Schubumkehrposition angeordnet sind, wobei diese Baugruppe **dadurch gekennzeichnet ist, dass** sie Mittel (23, 31) zum Verriegeln der Gleitbewegung der besagten Abdeckung (7) auf den besagten Schienen (15) umfasst, die zwischen dem besagten Masten (1) und der besagten Abdeckung (7) eingesetzt sind.

2. Baugruppe nach Anspruch 1, wobei die besagten Verriegelungsmittel einerseits einen Riegel (23) umfassen, der einen Korpus (27) und einen Schließhaken (29) umfasst, die gelenkig auf diesem Korpus (27) angebracht ist, und andererseits einen Sperrbolzen (31), der in der Lage ist, mit diesem Schließhaken (29) zusammenzuwirken.

3. Baugruppe nach Anspruch 2, wobei der besagte Riegelkorpus (27) im Inneren des besagten Mastes (1) montiert ist, wobei der besagte Schließhaken (29) durch eine Öffnung führt, die in diesen Masten (1) eingearbeitet ist, und der besagte Sperrbolzen (31) fest mit der besagten Abdeckung (7) verbunden ist.

4. Baugruppe nach Anspruch 2, wobei der besagte Riegelkorpus (27) im Inneren der besagten Abdeckung (7) montiert ist, wobei der besagte Schließhaken (29) durch eine Öffnung führt, die in der besagten Abdeckung (7) eingearbeitet ist, und der besagte Sperrbolzen (31) fest mit dem besagten Masten (1) verbunden ist.

5. Baugruppe nach Anspruch 4, wobei die Verriegelungsmittel in der Dicke der Struktur der besagten Abdeckung (7) enthalten sind.

6. Baugruppe nach einem der Ansprüche 4 oder 5, wobei man Kabel (41) zur Stromversorgung des besagten Riegels (23) vorsieht, die eine Überlänge aufweisen.

7. Baugruppe nach einem der Ansprüche 4 oder 5, wobei man Kabel zur Stromversorgung (41) des besagten Riegels (23) vorsieht, die von der festen Struktur der Gondel abgezogen werden können, wenn die besagte Abdeckung (7) von ihrer Direktstrahl-Position in ihre Schubumkehrposition übergeht.

8. Baugruppe nach irgendeinem der vorherigen Ansprüche, wobei die besagten Gitter (21) gleitend auf anderen Schienen (13) montiert sind, die beiderseits des Mastes (1) angeordnet sind, zwischen einer Betriebsposition und einer Wartungsposition montiert sind, wobei diese Schienen (13) im Verhältnis zu den Gleitschienen (15) der besagten aus einem Teil bestehenden Abdeckung (7) radial und umlaufend versetzt sind.

9. Baugruppe nach Anspruch 8, wobei man in er entriegelten Position ein umlaufendes Spiel (J) zwischen dem besagten Sperrbolzen (31) und dem besagten Schließhaken (29) vorsieht.

10. Baugruppe nach irgendeinem der vorherigen Ansprüche, wobei der besagte Riegel (23) einen Zapfen (43) zu Blockieren des Verriegelungssystems des besagten Schließhakens (29) umfasst, der von Hand abgenommen werden kann.

## Claims

1. An assembly for turbojet engine, comprising a pylon (1) and a nacelle (3) supported by this pylon (1), this nacelle (3) being of the type comprising a cascade-type thrust reverser (21) of O-duct type comprising an integral cowl (7) slidably mounted on tracks (15) disposed on either side of said pylon (1) between a direct jet position and a thrust reversal position, this assembly being **characterized in that** it comprises means (23, 31) for bolting the sliding of said cowl (7) on said tracks (15), interposed between said pylon (1) and said cowl (7).

2. The assembly according to claim 1, wherein said bolting means comprise on the one hand a lock (23) comprising a body (27) and a strike (29) articulated on this body (27), and on the other hand a bolt (31) capable of cooperating with this strike (29).

3. The assembly according to claim 2, wherein said lock (27) body is mounted inside said pylon (1), said strike (29) crossing an orifice formed in this pylon (1), and said bolt (31) is secured to said cowl (7).

4. The assembly according to claim 2, wherein said lock (27) body is mounted inside said cowl (7), said strike (29) crossing an orifice formed in this cowl (7), and said bolt (31) is secured to said pylon (1).

5. The assembly according to claim 4, wherein the bolting means are included in the thickness of the structure of said cowl (7).

6. The assembly according to any of claims 4 or 5, wherein there are provided electrical power cables (41) of said lock (23) which have an extra-length.

7. The assembly according to any of claims 4 or 5, wherein there are provided electrical power cables (41) of said lock (23) which can be disconnected from the stationary structure of the nacelle when said cowl (7) switches from its direct jet position to its thrust reversal position.

8. The assembly according to any one of the preceding claims, wherein said cascades (21) are slidably mounted on other tracks (13) disposed on either side of the pylon (1), between a service position and a maintenance position, these tracks (13) being radially and circumferentially shifted with respect to the tracks (15) for the sliding of said integral cowl (7).

9. The assembly according to claim 8, wherein it is provided a circumferential clearance (J) between said bolt (31) and said strike (29) in unbolted position.

10. The assembly according to any one of the preceding claims, wherein said lock (23) comprises a manually removable pin (43) for locking the bolting system of said strike (29).
